# EUROPEAN PATENT SPECIFICATION

(11) **EP 2 348 825 B1**
(45) Date of publication and mention of the grant of the patent: **08.07.2015**
(21) Application number: 09823879.3
(22) Date of filing: 28.10.2009
(51) Int. Cl.: A01K 61/00

(54) **A DEVICE FOR TREATMENT OF FISH IN NET CAGES**
GERÄT FÜR DIE BEHANDLUNG VON FISCHEN IN NETZKÄFIGEN
DISPOSITIF DE TRAITEMENT DE POISSONS DANS DES CAGES EN FILET

(30) Priority: 28.10.2008 NO 20084545
(43) Date of publication of application: 03.08.2011
(73) Proprietor: Rantex As, 8601 MO I Rana (NO)
(72) Inventor: TVEITEN, Svein, Brudeseth, N-8616 MO I Rana (NO)
(74) Representative: Zacco Norway AS
(86) International application number: PCT/NO2009/000375
(87) International publication number: WO 2010/050825

(56) References cited:
- WO-A1-87/04320
- WO-A2-03/063583
- JP-A- H06 284 835
- NO-B- 167 543
- US-A- 4 231 873
- US-A- 4 852 519
- US-A- 5 313 911
- US-A- 6 062 170

## Description

The present invention relates to a device for the treatment of fish in net cages and, then, in particular using a tarpaulin completely covering areas thereof beneath the sea surface. The invention is especially applicable in connection with delousing but this is not excluding that it may be used for another treatment of fish as well such as medication, supply of other additives in the water to prevent as examples diseases, parasites, unwanted algae, etc.

Lice on fish are a natural phenomena but, of course, the problem is increased when concentrating fish within net cages. Testes to solve the problem have given more or less successful results. As examples of such are wrasse, medication in the fish meal, or like so-called traditional delousing having medication within "the bath water", namely direct into the net cage. In connection with the latter variant it is used tarpaulins mainly in the form of a skirt being lowered into the sea, and which provide a substantial vertical wall in a depth until 15m around the net cage. Then, a delousing agent is discharged into the net cage at different spots and the fish swim within the mixture for half an hour, for instance. However, the disadvantage is that the method is only useful for net cages having a certain extent.

However, a trend in the breeding industry is larger and larger net cages, whereby a circumference of 160 m now has become quite ordinarily. With traditional delousing techniques and a tarpaulin skirt, as mentioned above, it is evident that the medication is not remaining within the net cage in a period sufficient to achieve a favourable effect as regards the delousing. Another problem more and more experienced is lice gradually becoming resistant. It has been developed medicines killing resistant lice. However, the agent is heavier than water and descends to rapid through the net cage without achieving an effective delousing. By having a bottom in the tarpaulin, movement of the fish enables an agitation of the water and, thereby, the agent is maintained floating until the treatment has been effected. The idea having a fully surrounding tarpaulin not only covering the vertical portion but also a horizontal portion at the bottom of the net cage is not novel. A disadvantage thereof is the handling itself when a tarpaulin about 3.500m² is to be hauled in beneath and up around the net cage.

In addition to the handling of totally covering large tarpaulin, these cause other challenges. Inter alia, the fish are locked up within a "closed" space, having the consequence that oxygen probably has to be supplied in the water to replace that being used. Moreover, the fish may be stressed by a tarpaulin and the handling thereof which involve an accelerating process with further consumption of oxygen and increased stress. This is inter alia resulting in situations at which fish breeders are expecting that the tarpaulin has to be rapidly lowered.

NO 167543 B discloses a net cage having an upper portion of net material made with appropriate mesh width and a lower portion of compact material without meshes such as reinforced fabric or the like. Raising and lowering the lower compact portion relatively to the upper portion in case of an emergency, e.g. algal bloom, is effected by means of solely cables or wires being fastened to the compact material. According to an embodiment, the upper portion of net material can be mounted at the upper end thereof to a buoyancy system. The buoyancy system is only used when installing the net cage around an inner net cage made from mesh material. Despite this particular buoyancy system, raising and lowering the compact lower portion has to be performed using the cables or wires.

Accordingly, the main objective of the present invention is to provide for a completely covering tarpaulin which can readily be both raised to the sea surface around the net cage or down beneath its bottom level.

This objective is achieved by a device for the treatment of fish in net cages, comprising the technical features of independent claim 1.

Favourable embodiments of the invention are specified in the dependent patent claims and discussion below.

In the following, the present invention is now to be explained further by means of preferred embodiments shown in the accompanying drawings in which:
Fig. 1 shows in side view a buoyancy element which can be filled with or drained for a fluid and is to be fastened at or near an outer circumference of a tarpaulin according to the invention;
Fig. 2 shows in side view further details of the buoyancy element in Fig. 1;
Fig 3 shows in top view a tarpaulin according to the invention and being provided with at its area in the sea surface four such buoyancy elements, eight hauling/lifting straps and a reinforcement extending circumferentially around the tarpaulin; and
Fig. 4 to 6 show in perspective how such a tarpaulin can be arranged completely covering around a net cage up to the sea surface.

According to the present invention, it has been developed a tarpaulin based on net cage having a circumference of approximately 165m, for instance. With larger or smaller net cages the dimensions are correspondingly adjusted. As already mentioned introductorily, the present invention is not exclusively suited for use in connection with delousing but for any type of treatment in which it is appropriate with a temporary "closing" of the net cage against the surrounding water for the supply of a suitable additive substance or agent. Hereinafter, it is for the sake of simplicity only referred to delousing.

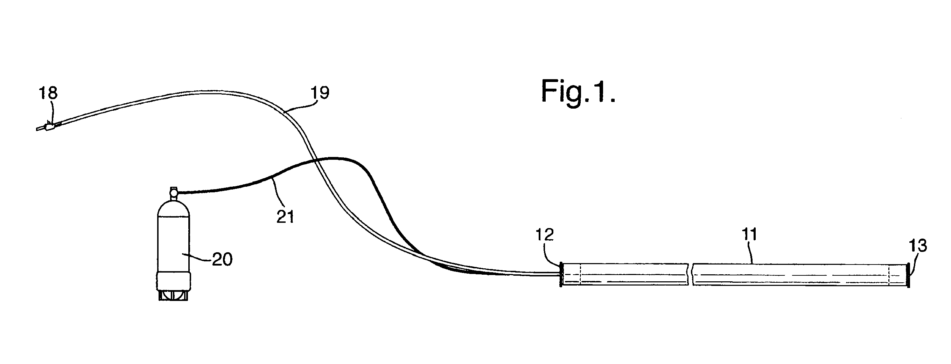

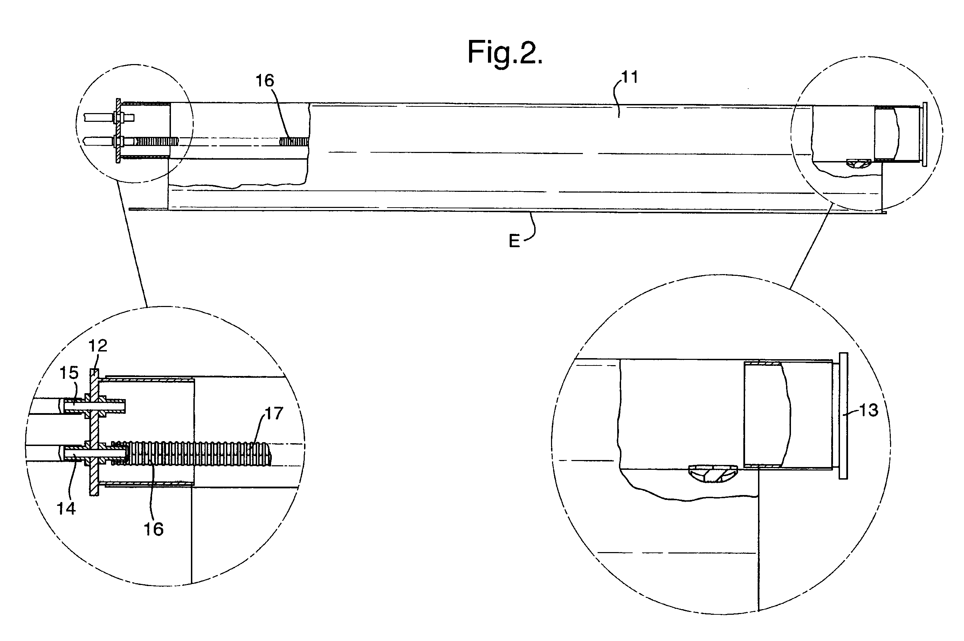

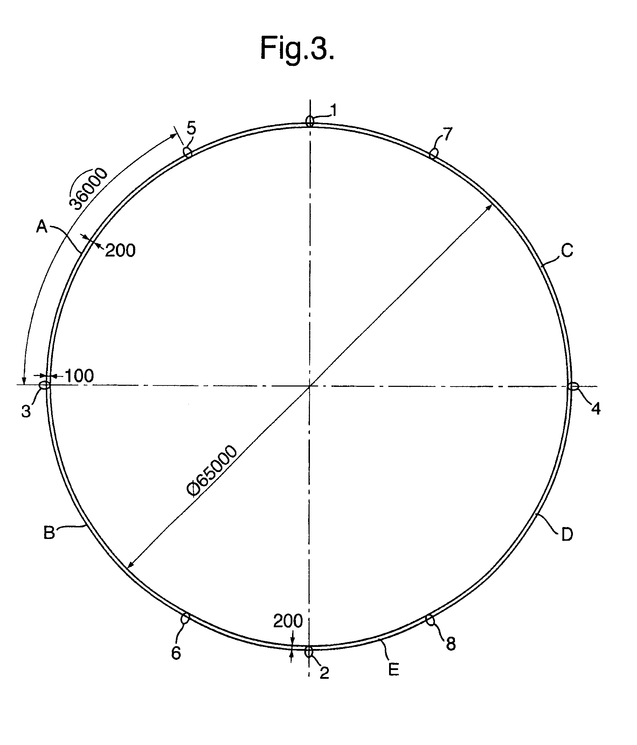

Such a delousing tarpaulin is made up in the following manner:
- A main sheet which is sufficiently large to extend below all of the net cage and up to the sea surface on the exterior thereof, i.e. minimum the net cage diameter plus the distance from a bottom ring of the net cage up to the sea surface. In practice a ring having a diameter of approximately 53,5m requires a tarpaulin with a diameter of about 65m. A material or fabric of the main sheet is selected such that it in combination is achieved maximum strength and weight. In practice the weight should not exceed more than maximum 250g/m², having a tear resistance of minimum 400N according to normal measure methods. Other factors determining the nature of the material or fabric are a desire to have minimum penetration of water and weight exceeding the water.
- On an outer side of the sheet it is sewn up a reinforcement E, preferentially along the entire circumference, namely about 205m, see Fig. 3. In a desired distance around all of the reinforcement, there are installed brass eyes, not illustrated. The reinforcement is selected with an appropriate width.
- Additionally, it is sewn up very strong hauling/lifting straps 1 to 8. An appropriate number of these straps are eight but the number can of course be adjusted if needed. As an example, the straps can be distributed in the following manner, see Fig 3. At a virtual axis through a centre of the tarpaulin, namely the circle, a first strap 1 is located where the axis crosses the circle at one side and also the second strap 2 on an opposite side. Perpendicular to the same axis it is drawn another axis where the third and fourth straps 3, 4 are correspondingly situated. Now, the circle is divided into four equal parts. From the third strap 3 in a distance of 36m, for instance, towards the first strap 1, the fifth strap 5 is arranged, further 36m from the same strap towards the second strap 2, a spot for locating the sixth strap is found. Correspondingly at the opposite side starting from the fourth strap 4, locations for the seventh and eight straps 7, 8 are present.
- The delousing tarpaulin has in connection with the reinforcement E four descendable buoyancy elements A, B, C, D, see Fig. 3. As an example, these are sausage formed and each having a length of approximately 35m. The buoyancy elements are mounted such that the element A is extending from the third strap 3 towards the fifth 5, the element B from the third towards the second strap 2, the element C from the fourth strap 4 towards the seventh 7, and the element D from the seventh towards the eight strap 8. It is understood that the number of buoyancy elements can vary from the four being illustrated. Moreover, it is not a necessity that these elements extend completely around the circumference of the tarpaulin, it is on the contrary favourably having a certain distance, whereby some clearance is available for possible folding of the tarpaulin. When needed, the only presumption is to achieve a complete lifting up around or descending beneath the bottom of the net cage as fast as possible.
- The buoyancy elements are primarily how the present tarpaulin differs from the state of art, see Fig. 1 and 2. Forming the elements A to D to a net cage having a diameter of 165m, for instance, is as follows:
   a. A main element consists of a hose 11 having a length of 35m and a diameter of 140mm, see Fig. 2. In each end of the hose, it is located an end sealing/bottom 12, 13. In the end sealing/bottom 12, it is located two passages 14, 15, one for supply of compressed air and the other for evacuating air. In an opposite end of the hose a relief valve is mounted, not shown. Within the entire length of the hose it is situated a vacuum line 16 mounted and is starting at the passage 14 for evacuating air. To achieve that the entire length of each buoyancy element is to be drained simultaneously, there are holes 17 in the entire length of the vacuum line 16, e.g. in a centre distance of 10cm. It is understood that the air can be replaced by another fluid in the form of either gas or liquid.
      Further, more than the two passages shown and one the vacuum line can be present, whereby the filling and/or draining can be performed in a more rapid manner.
   b. From the exterior of a passage 14, the vacuum line 16 is extended up to a boat of suitable type, a recommended length is approximately 25m. In an end of the vacuum line, a crane 18 can mounted. Along with a drainage line 19 in extension of the vacuum line 16 beyond the end sealing /bottom 12, a separate line 21 for compressed air is extending to the passage 15 for the supply of compressed air. The compressed air may be fed from different sources 20, e.g. at least one compressor or cylinder. The supply of compressed air has to be adjustable. In addition to lines for compressed air and drainage, there is a rope having a diameter of 8-10mm for tension relief, not illustrated.
   c. Around the hose 11 it can be mounted a shielding, e.g. of netting-PVC, not shown. This shielding must not affect the buoyancy.
   d. To enable the buoyancy elements A to D to be descended as fast as needed, it is arranged a rope made from lead, for instance, having a weight of 2kg/m along the complete length of the hoses 11, and a flexible sheath can be situated outside the PVC hose, not illustrated.
   e. Tests prove that the hose is naturally raised by the supply of air. When the air supply is closed and the vacuum hose is opened, the weight of the lead rope and also an increasing water pressure from the surroundings are forcing the air out of each hose which descends along with other parts of the tarpaulin.

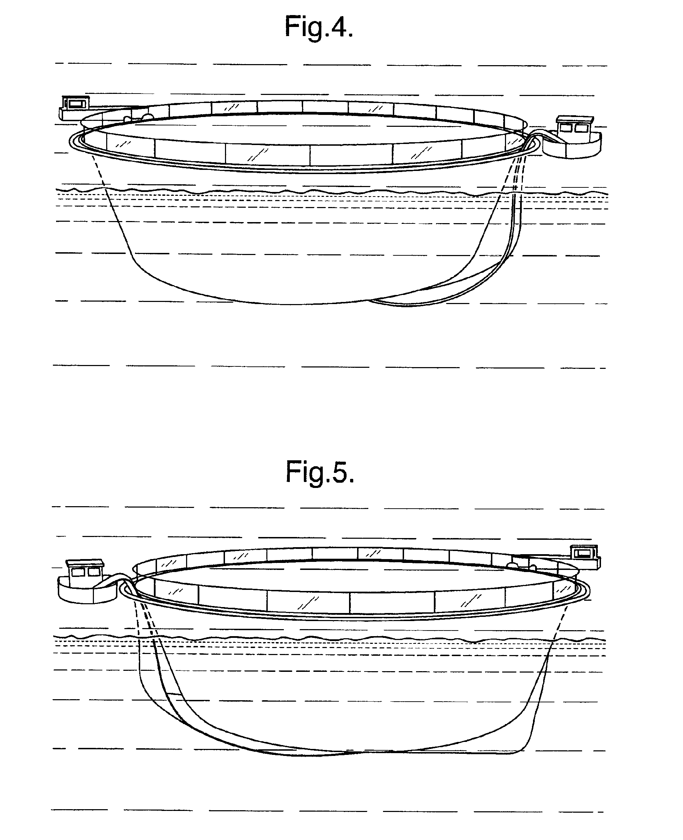

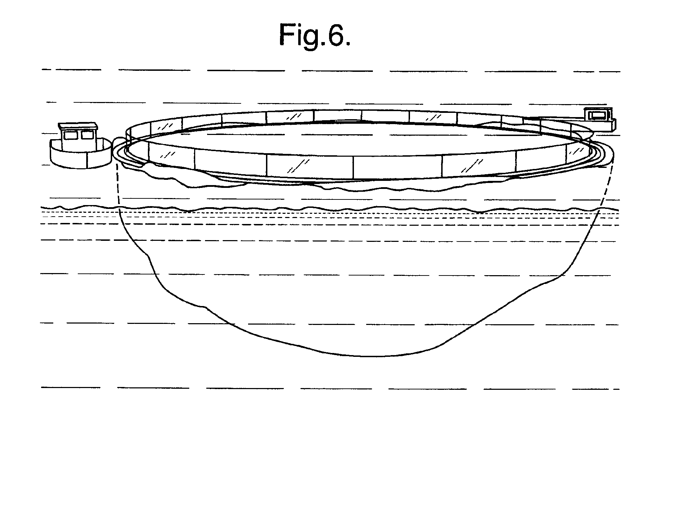

As already mentioned introductorily, handling of the delousing tarpaulin is thereby facilitated. In practice the installing and raising of the delousing tarpaulin are now performed in the following manner, for instance, see Fig. 4 to 6.
i) At first, the bottom ring of the net cage is raised, whereby the depth is reduced from about 15m to 7m dependent of the depth thereof.
ii) Then, a solid rope is fastened to the first strap 1 on the tarpaulin and provided that only one person is present, this person moves from a first boat at a position corresponding to the second strap 2 on the circle mentioned above, around the net cage forward to the first strap to get the rope. The same may possibly be done for the seventh and eight straps 7, 8, respectively, and also the fifth and sixth straps 5, 6. Next, the rope is descended into the sea to be guided beneath mooring ropes and the like. In the position of the second strap 2 on the circle an additional winch boat starts winching the tarpaulin by means of the at least one rope beneath the net cage and up to the opposite side thereof. The winching continues and, when the tarpaulin arrives at an opposite side of the main boat, the works starts to fill air within the buoyancy elements A to D. Thereby, the buoyancy can take hand of the heavy loads but assistance from the ropes might be needed, whereby the tarpaulin is not fastened beneath the net. If the rope alternatively is at first fastened to the third strap 3, the winch boat is positioned at the fourth strap 4 on the circle. This can correspondingly be performed for the fifth and seventh straps 5, 7, respectively, and also the sixth and eight straps 6, 8. During some minutes the floating ring on the buoyancy elements and the tarpaulin arrive on the exterior of the net cage, and the tarpaulin is forming a vessel around the net cage and the treatment for delousing can be started.
iii) As mentioned introductorily, due to different circumstances it may be needed to rapidly lower the tarpaulin. This is performed by opening the vacuum hose 16, whereby the air in each of the buoyancy elements A to D can be drained which is causing that the tarpaulin descends.

## Claims

1. A device for the treatment of fish in net cages, comprising a tarpaulin having a dimension for either raising up into a position for completely surrounding the net cage below the sea surface or lowering down to a level below the lower portion of the net cage, where the tarpaulin for raising and lowering thereof at or close to its upper, outer circumference is provided with buoyancy equipment in the form of a plurality of buoyancy elements (A, B, C, D) each individually adapted to be filled with or drained for a fluid, such as air or liquid, where each buoyancy element (A, B, C, D) is in the form of a hose (11) which at the respective end is equipped with an end sealing (12, 13),
**characterized in**
- **that** one end sealing (12) has at least two through passages (15, 14) for supply and drainage of the fluid from the hose, respectively,
- |that at least one vacuum line (16) is arranged within each buoyancy element (A, B, C, D) along the entire length of the buoyancy element, the vacuum line being connected with an end to the respective drainage passage (14), and
- **that** the vacuum line (16) is configured with holes (17) over its entire length to thereby secure simultaneous drainage of all of the fluid from each buoyancy element (A, B, C, D).

2. A device according to claim 1, **characterized in that** the at least one passage (14) for drainage of the fluid from the respective buoyancy element (A, B, C, D) is provided with an external faucet (18) coupled via a drainage line (19).

3. A device according to claim 1 or 2, **characterized** i n that the tarpaulin in the area of the buoyancy elements (A, B, C, D) is equipped with a reinforcement (E), and
that the tarpaulin is formed with hauling or lifting straps (1, 2, 3, 4, 5, 6, 7, 8) positioned at the outer circumference thereof.

## Patentansprüche

1. Gerät für die Behandlung von Fischen in Netzkäfigen, umfassend eine Plane mit einer Abmessung für entweder das Anheben in eine Position für ein völliges Umgeben des Netzkäfigs unter der Meeresoberfläche oder für das Senken zu einer Ebene unter dem unteren Abschnitt des Netzkäfigs, wobei die Plane für dessen Anheben oder Senken bei oder in der Nähe von seinem oberen Außenumfang mit einer Schwimmausrüstung in Form einer Mehrzahl von Schwimmelementen (A, B, C, D) versehen ist, welche jeweils dazu ausgebildet sind, mit einem Fluid gefüllt oder von einem Fluid geleert zu werden, wie beispielsweise Luft oder Flüssigkeit, wobei jedes Schwimmelement (A, B, C, D) in Form eines Schlauchs (11) vorliegt, welcher an dem jeweiligen Ende mit einer Enddichtung (12, 13) ausgestattet ist,
**dadurch gekennzeichnet,**
- **dass** eine Enddichtung (12) zumindest zwei Durchgänge (14, 15) für die Versorgung bzw. das Entleeren des Fluids aus dem Schlauch aufweist,
- **dass** zumindest eine Vakuumleitung (16) in Inneren von jedem Schwimmelement (A, B, C, D) entlang der gesamten Länge des Schwimmelements angeordnet ist, wobei die Vakuumleitung mit einem Ende mit dem jeweiligen Entleerungsdurchgang (14) verbunden ist, und
- **dass** die Vakuumleitung (16) mit Löchern (17) über ihre gesamte Länge ausgebildet ist, um ein zuverlässiges Entleeren des gesamten Fluids aus jedem Schwimmelement (A, B, C, D) vorzusehen.

2. Gerät nach Anspruch 1, **dadurch gekennzeichnet, dass** der zumindest eine Durchgang (14) für das Entleeren des Fluids aus dem jeweiligen Schwimmelement (A, B, C, D) mit einem externen Wasserhahn (18) versehen ist, der über eine Abwasserleitung (19) verbunden ist.

3. Gerät nach Anspruch 1 oder 2, **dadurch gekennzeichnet, dass** die Plane im Bereich der Schwimmelemente (A, B, C, D) mit einer Verstärkung (E) ausgestattet ist, und
dass die Plane mit Zug- oder Hebebändern (1, 2, 3, 4, 5, 6, 7, 8) ausgebildet ist, die am Außenumfang davon angeordnet sind.

## Revendications

1. Dispositif pour le traitement de poissons dans des cages en filet, comprenant une bâche ayant une dimension adaptée de manière à soit la soulever dans une position pour entourer complètement la cage en filet en dessous de la surface de la mer ou la baisser à un niveau au-dessous de la partie inférieure de la cage en filet, la bâche destinée à soulever ou baisser celle-là au niveau de ou à proximité de sa périphérie extérieure et supérieure étant pourvue d'équipement de flottabilité dans la forme d'une pluralité d'éléments de flottabilité (A, B, C, D), chacun adapté individuellement de manière à être rempli avec ou drainé d'un fluide tel que l'air ou de liquide, chaque élément de flottabilité (A, B, C, D) étant dans la forme d'un tuyau (11) qui, à l'extrémité respective, est muni d'un scellage d'extrémité (12, 13),
**caractérisé en**
- **ce qu'**un scellage d'extrémité (12) présente au moins deux passages traversants (14, 15) pour l'alimentation et le drainage du fluide à partir du tuyau, respectivement,
- ce qu'au moins une ligne de vide (16) est disposée à l'intérieur de chaque élément de flottabilité (A, B, C, D) le long de la longueur totale de l'élément de flottabilité, la ligne de vide étant reliée à une extrémité au passage de drainage respectif (14), et
- ce que la ligne de vide (16) est configurée avec des trous (17) sur sa longueur totale pour ainsi assurer le drainage simultané de la totalité du fluide à partir de chaque élément de flottabilité (A, B, C, D).

2. Dispositif selon la revendication 1, **caractérisé en ce que** l'au moins un passage (14) pour le drainage du fluide à partir de l'élément de flottabilité respectif (A, B, C, D) est muni d'un robinet extérieur (18) couplé via une ligne de drainage (19).

3. Dispositif selon la revendication 1 ou 2, **caractérisé en ce que** la bâche dans la zone des éléments de flottabilité (A, B, C, D) est équipée d'une armature (E), et
la bâche est formée avec des sangles de traction ou de levage (1, 2, 3, 4, 5, 6, 7, 8) positionnées au niveau de la circonférence extérieure de celle-ci.
